# FASCICULE DE BREVET EUROPEEN

(11) **EP 2 738 437 B1**
(45) Date de publication et mention de la délivrance du brevet: **09.09.2015**
(21) Numéro de dépôt: 13194888.7
(22) Date de dépôt: 28.11.2013
(51) Int. Cl.: F16L 37/30, F16L 37/23, F16L 37/35, F16L 37/34, F16L 55/10

(54) **Raccord**
Rohrleitungskupplung
Fluid connector

(30) Priorité: 29.11.2012 FR 1261434
(43) Date de publication de la demande: 04.06.2014
(73) Titulaire: STÄUBLI FAVERGES, 74210 Faverges (FR)
(72) Inventeur: Tiberghien, Alain-Christophe, 74320 Sevrier (FR); Durieux, Christophe, 73200 Gilly sur Isere (FR); Marques Barroca, Serafim, 73460 Frontenex (FR)
(74) Mandataire: Myon, Gérard Jean-Pierre

(56) Documents cités:
- DE-A1- 2 724 630
- DE-B- 1 078 826
- US-A1- 2009 224 534

## Description

L'invention concerne un raccord constitué d'un élément de raccord et d'un élément de raccord complémentaire aptes à s'accoupler. En particulier, il peut être considéré que l'élément de raccord est un élément mâle et l'élément de raccord complémentaire est un élément femelle étant entendu que l'inverse est envisageable.

A titre d'exemple, l'invention a pour application un raccord fluidique pour gros passages dont le diamètre est supérieur à 20 mm. Une application potentielle est par exemple un raccord de remplissage pour un liquide réfrigérant.

Il est connu que pour les raccords avec gros passages, les joints d'étanchéité ayant un diamètre important, les efforts dus aux frottements lors des phases d'accouplement et de désaccouplement sont des efforts importants. Des ressorts intégrés au raccord sont alors dimensionnés pour accompagner le rappel des pièces soumises à ces efforts de frottement comme la soupape en position de fermeture. Il en résulte que, lors de la phase d'accouplement, l'opérateur doit exercer un effort important pour, d'une part, compenser les efforts de frottement liés aux joints et, d'autre part, comprimer les ressorts.

Par ailleurs, US-A-2009/0224534, sur lequel est basé le préambule de la revendication 1, divulgue un raccord de passage d'air comprimé. Ce raccord comprend un élément de raccord destiné à être connecté avec un élément de raccord complémentaire. L'élément de raccord comporte un bâti, un manchon qui est vissé à l'intérieur du bâti, une bague d'étanchéité qui est disposée coaxialement à l'intérieur du manchon et un piston. On définit un corps de l'élément de raccord formé par le bâti et le manchon. La bague d'étanchéité est pourvue d'évidements de passage de l'air comprimé. En configuration désaccouplée, la bague d'étanchéité est dans une position d'obturation où les évidements sont bouchés par le manchon si bien qu'il n'y a pas de passage d'air dans le raccord. Durant l'accouplement, la bague d'étanchéité se déplace axialement vers une position d'ouverture où l'air peut circuler dans les évidements. En position d'obturation, la bague d'étanchéité est attelée au corps de l'élément de raccord par l'intermédiaire de billes qui sont logées, d'une part, dans des trous traversants de la bague d'étanchéité et, d'autre part, dans des trous oblongs du manchon. Autour du manchon est disposé un anneau de verrouillage qui est mobile autour du corps et soumis à un effort de charge élastique en direction de l'extrémité avant de l'élément de raccord. En position d'obturation de la bague d'étanchéité, l'anneau de verrouillage maintient les billes pour la solidarisation axiale entre le manchon et la bague d'étanchéité. Cet anneau est apte à recouvrir les billes et à les bloquer en coopération avec l'élément de raccord complémentaire, pour solidariser axialement le corps de l'élément de raccord complémentaire avec la bague d'étanchéité en cours d'accouplement et de désaccouplement.

Le fait de bloquer les billes d'attelage par l'anneau de verrouillage ne fiabilise pas la solidarisation axiale de la bague d'étanchéité avec le corps de l'élément de raccord complémentaire en cours d'accouplement et de désaccouplement. Pour cette raison, le raccord utilise un ressort de rappel de la bague d'étanchéité vers une configuration d'obturation du raccord, ce qui complexifie le montage du raccord et augmente les efforts d'accouplement. Ce ressort est disposé au sein du canal fluidique et son fonctionnement risque d'être altéré par la pression de l'air comprimé circulant dans le raccord.

C'est à cet inconvénient qu'entend plus particulièrement remédier l'invention en proposant un raccord dont la connexion s'effectue de manière plus fiable et avec moins d'efforts d'accouplement et qui reste simple.

A cet effet l'invention concerne un raccord fluidique tel que défini à la revendication 1.

Grâce à l'invention, en configuration désaccouplée, l'organe d'attelage, bloqué par l'organe de blocage, permet de maintenir la bague d'étanchéité dans cette position d'obturation étanche du corps de l'élément de raccord. Alors qu'au cours de l'accouplement et du désaccouplement, le même organe d'attelage, libéré du recouvrement de la bague de blocage, permet d'atteler la bague d'étanchéité au corps de l'élément de raccord complémentaire pour solidariser axialement leurs mouvements. La bague d'étanchéité n'a donc pas à être repoussée élastiquement vers sa position d'obturation et les efforts d'accouplement sont donc réduits. L'invention reste simple, dans le sens où un même organe d'attelage coopère axialement à la fois avec le corps de l'élément de raccord et le corps de l'élément de raccord complémentaire. On comprend que la coopération de l'organe d'attelage avec l'élément de raccord et celle avec l'élément de raccord complémentaire sont deux opérations distinctes et successives. En effet, en configuration désaccouplée, l'organe d'attelage est apte à solidariser axialement la bague d'étanchéité avec le corps de l'élément de raccord, puis dans un deuxième temps, lors de l'accouplement et du désaccouplement, l'organe d'attelage, alors désuni du corps de l'élément de raccord, permet d'atteler la bague d'étanchéité au corps de l'élément de raccord complémentaire. En outre, le rappel de la bague d'étanchéité en position d'obturation ne s'effectue pas au moyen d'un ressort central disposé au sein du canal fluidique. Enfin, le fait de bloquer l'organe d'attelage par le corps de l'élément de raccord dans la deuxième position fiabilise davantage la solidarisation axiale entre la bague d'étanchéité et le corps de l'élément de raccord complémentaire.

Des aspects avantageux mais non obligatoires de l'invention sont spécifiés aux revendications 2 à 12.

L'invention sera mieux comprise et d'autres avantages de celle-ci apparaîtront plus clairement à la lumière de la description qui va suivre d'un mode de réalisation d'un raccord conforme à son principe, donnée uniquement à titre d'exemple et faite en référence aux dessins annexés dans lesquels :
- la figure 1 est une coupe longitudinale d'un élément mâle appartenant à un raccord conforme à l'invention,
- la figure 2 est une coupe longitudinale d'un élément femelle appartenant au raccord conforme à l'invention,
- les figures 3 à 5 sont des coupes longitudinales du raccord, montrant trois configurations d'accouplements distinctes et successives.

Dans le mode de réalisation décrit ci-dessous, l'arrivée du fluide peut se faire indifféremment côté élément mâle ou côté élément femelle.

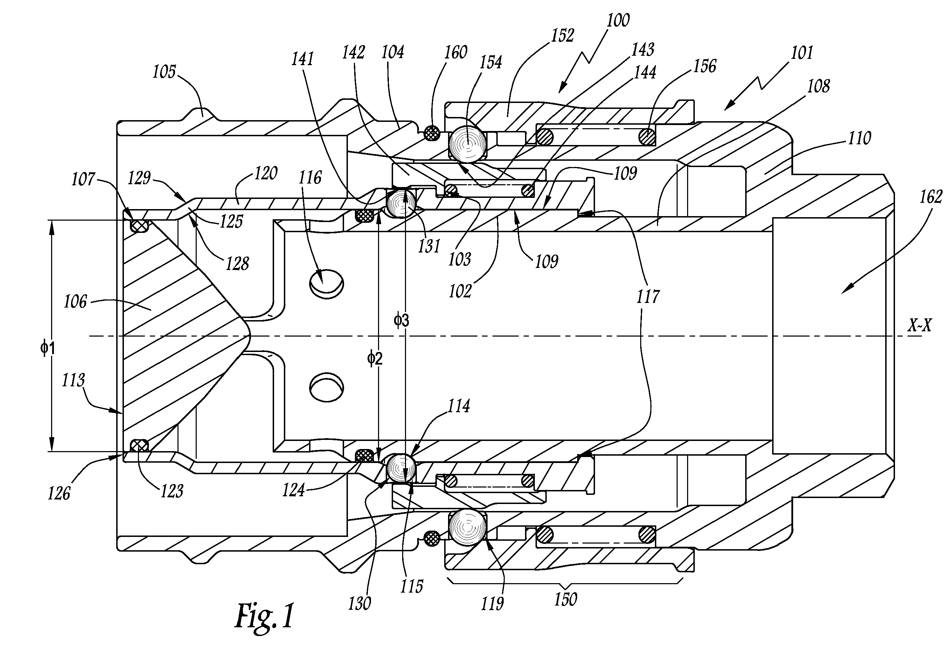

L'élément mâle 100 représenté à l'état désaccouplé à la figure 1 présente une structure globalement tubulaire centrée sur un axe X-X. Dans la suite de la description, une direction radiale ou tout ce qui est caractérisé radialement fait référence à une direction perpendiculaire à l'axe X-X. Le corps 101 de cet élément mâle 100 comporte un piston 102 et une structure 104 qui constituent respectivement les parties interne et externe du corps 101 de l'élément mâle 100. Le piston 102 comprend une partie globalement conique 106 et une partie globalement cylindrique 108, toutes les deux sensiblement centrées sur l'axe X-X. La partie conique 106 du piston 102 est située à l'avant de l'élément mâle 100, c'est-à-dire tournée, en cours d'accouplement, vers un élément complémentaire du raccord auquel appartient l'élément mâle 100. La partie conique 106 et la partie cylindrique 108 du piston 102 forment un seul bloc. La partie cylindrique 108 délimite un canal interne d'écoulement du fluide 162 dans l'élément de raccord 100 et présente dans sa partie terminale avant, c'est-à-dire en contact avec la partie conique 106, des ouvertures 207 dans lesquelles le fluide peut circuler lorsque le raccord est accouplé. La partie conique 106 présente une surface radiale externe 107 tandis que la partie cylindrique 108 du piston 102 présente une surface radiale externe 109, comportant un logement creux périphérique 114. Le corps 101 de l'élément mâle 100 est formé d'un seul bloc, le piston 102 et la structure externe 104 étant reliés par une partie terminale arrière 110 du corps 101, le canal d'écoulement 162 étant raccordé à une canalisation non représentée au niveau de la partie terminale arrière 110. La structure externe 104 s'étend donc de cette partie terminale arrière 110 jusqu'à la partie terminale avant du corps 101, au même niveau axial de laquelle est sensiblement située la partie conique 106 du piston 102.

Une bague d'étanchéité 120 de forme globalement tubulaire est disposée radialement entre le piston 102 et la partie externe 104. Un premier joint d'étanchéité 123, logé au niveau de la surface radiale externe 107 est disposé radialement entre la bague d'étanchéité 120 et la partie conique 106 du piston 102 et un deuxième joint d'étanchéité 124, logé au niveau de la surface radiale externe 109, à l'avant du logement périphérique creux 114, est disposé radialement entre la partie cylindrique 108 du piston 102 et la bague d'étanchéité 120, ce qui assure un recouvrement étanche du piston 102 au niveau des ouvertures 207 par la bague d'étanchéité 120 en configuration désaccouplée et donc l'obturation du canal d'écoulement 162 et de la canalisation reliée à l'élément de raccord 100.

On définit un épaulement 125, donnant lieu à un rétrécissement du diamètre de la bague d'étanchéité vers l'avant. On note une première face plane 126 de la bague d'étanchéité 120, comme l'extrémité axiale avant. De la même manière, on note une deuxième face plane 113 comme l'extrémité axiale avant du piston 102. L'épaulement 125 présente également une surface interne 128 et une surface externe 129.

La bague d'étanchéité 120 présente, dans sa partie sensiblement située au même niveau axial que le joint d'étanchéité 123 un diamètre intérieur Φ1 et, dans sa partie sensiblement située au même niveau axial que le joint d'étanchéité 124, un diamètre intérieur Φ2. Φ1 et Φ2 sont les diamètres d'étanchéité de la bague d'étanchéité 120 avec le piston 102 en configuration désaccouplée. Φ1 est strictement inférieur à Φ2 par exemple de l'ordre de 0,15 mm : ceci a pour avantage, en présence d'un fluide sous pression à l'intérieur de la bague d'étanchéité, de plaquer la bague d'étanchéité 120 vers l'avant en butée contre un épaulement 117 du piston 102. En effet, la pression du fluide sur la surface interne de la bague d'étanchéité 120, notamment au niveau de la surface 128 de l'épaulement 125 tend à maintenir l'obturation de l'élément mâle 100.
La partie cylindrique 108 du piston 102 comporte également des trous traversants radiaux 116 répartis autour de l'axe X-X et disposés axialement à l'avant par rapport au joint 124 et à l'arrière par rapport aux ouvertures 207 sur une partie du piston 102 dont le diamètre extérieur est inférieur au diamètre Φ2. Le couple de faces planes 126 et 113 sont des faces planes affleurantes l'une avec l'autre. Ceci permet astucieusement de limiter les résidus de fluide.
La bague d'étanchéité 120 est mobile selon l'axe X-X par rapport au piston 102 au cours de l'accouplement et du désaccouplement et porte un organe d'attelage 130. Cet organe d'attelage 130 est mobile radialement par rapport à la bague d'étanchéité et comporte, voire se compose de billes d'attelage 131. En l'occurrence, dans cet exemple, 12 billes d'attelage sont logées et mobiles radialement dans des logements cylindriques 115 respectifs ménagés dans la bague d'étanchéité 120 autour de l'axe X-X et, dans la configuration désaccouplée, sont partiellement disposées dans le logement creux 114 de la partie cylindrique 108 du piston 102.

Une bague mémoire 142 est disposée radialement entre la bague d'étanchéité 120 et la partie externe 104 du corps mâle 101. Un ressort 144 est intercalé entre la bague d'étanchéité 120 et la bague mémoire 142 selon l'axe X-X et repousse la bague mémoire 142 vers l'avant de l'élément de raccord 100 et en butée contre un épaulement 103 de la bague d'étanchéité 120. En configuration désaccouplée, la bague mémoire 120, alors en butée contre l'épaulement 103, recouvre radialement les billes d'attelage 131 logées à la fois dans les logements cylindriques 115 et dans le logement creux 114, où elles sont bloquées, en coopération axiale avec le piston 102, afin d'atteler le corps 101 et la bague d'étanchéité 120, autrement dit, de solidariser axialement, aux jeux près, le corps 101 et la bague d'étanchéité 120. L'attelage du corps 101 avec la bague d'étanchéité 120 assure le recouvrement étanche du piston 102 par la bague d'étanchéité 120.

L'élément mâle 100 comprend également un dispositif de verrouillage 150. Ce dispositif de verrouillage 150 comprend à la fois une bague de verrouillage 152, disposée extérieurement à la structure externe 104 du corps 101 de l'élément raccord 100, des billes de verrouillage 154, qui sont logées de façon radialement mobile dans des logements cylindriques 119 de la structure externe 104 du corps 101, et un ressort de verrouillage 156 qui est intercalé axialement entre la partie externe 104 du corps 101 et la bague de verrouillage 152 pour repousser axialement la bague de verrouillage 152 vers l'avant de l'élément de raccord 100, en position de recouvrement radial des billes de verrouillage 154. En configuration désaccouplée, les billes de verrouillage 154 sont disposées radialement entre la bague mémoire 142 et la bague de verrouillage 152. La bague mémoire 142 coopère avec les billes de verrouillage 154 qui dépassent radialement vers l'extérieur de la structure externe 104, repoussant ainsi la bague de verrouillage 152 en position arrière à l'encontre du ressort de verrouillage 156, et bloque donc le dispositif de verrouillage 150 en position déverrouillée. Avec la bague mémoire 142 repoussée par le ressort 144 en configuration désaccouplée du raccord, la surface radiale interne 141 de la bague mémoire 142, qui présente un diamètre Φ3, recouvre les billes d'attelage 131 tandis que la surface radiale externe 143 de la bague mémoire 142 recouvre les billes de verrouillage 154. On définit une bague de protection 105 comme une partie terminale avant de la structure externe 104 de l'élément mâle 100. Cette bague de protection 105 permet donc avantageusement de protéger la surface externe de la bague d'étanchéité 120 en cas de choc et limite l'accessibilité à la bague mémoire 142.

Un témoin visuel 160 est également positionné extérieurement sur la structure externe 104 du corps 101 de l'élément mâle 100 et est découvert par la bague de verrouillage 152 en configuration désaccouplée.

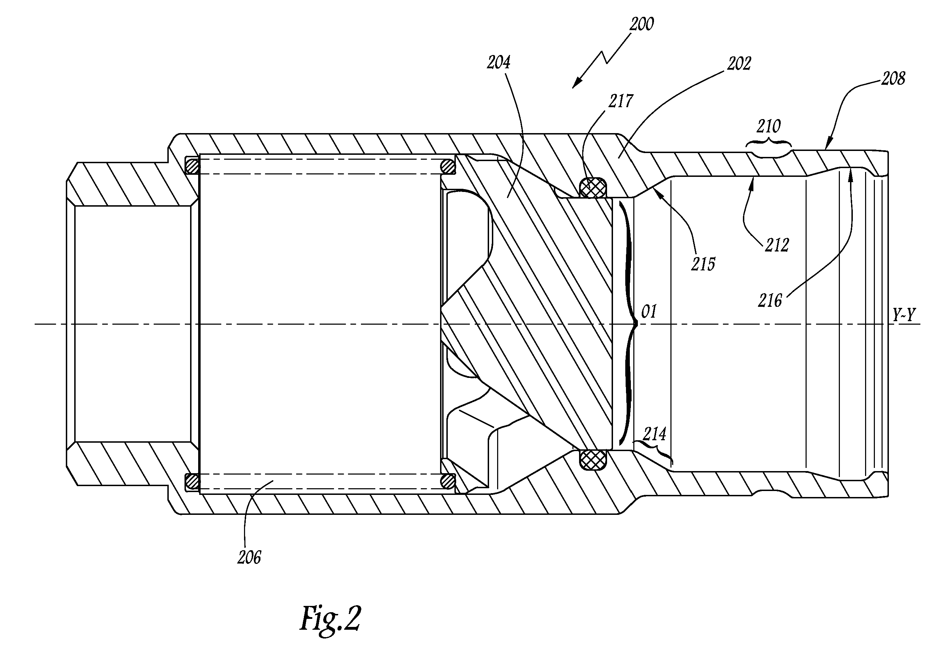

Sur la figure 2 est représenté un élément de raccord complémentaire 200, qui dans l'exemple considéré, est un élément femelle, dans la configuration désaccouplée. Cet élément femelle 200 présente une forme globalement tubulaire autour d'un axe Y-Y et comprend une partie externe 202 qui constitue le corps de l'élément femelle et une soupape 204. La partie externe 202 est reliée à une canalisation non-représentée. Dans la configuration désaccouplée du raccord, la soupape 204 obture une ouverture O1. Un ressort 206 prend appui sur la soupape 204 et sur le corps 202 de l'élément femelle, parallèlement à l'axe Y-Y et repousse la soupape 204 vers l'avant du corps 202 en position de fermeture contre le corps 202.

Par ailleurs, le corps 202 de l'élément femelle 200 présente sur sa surface externe 208 un logement creux périphérique 210 et, sur sa surface interne 212, un épaulement 214 ayant une surface interne 215 et s'élargissant vers l'avant, ainsi qu'un logement creux périphérique 216, disposé axialement à l'avant par rapport au logement 210 et à l'épaulement 214. L'extrémité avant du corps 202 de l'élément femelle, c'est-à-dire tournée vers l'élément mâle 100 en cours d'accouplement présente un diamètre intérieur minimal Φ6, disposé à l'avant du logement creux 216. Un joint d'étanchéité 217 est logé dans le corps 202 au niveau de l'ouverture O1, et disposé radialement entre la soupape 204 et le corps de l'élément femelle 202.

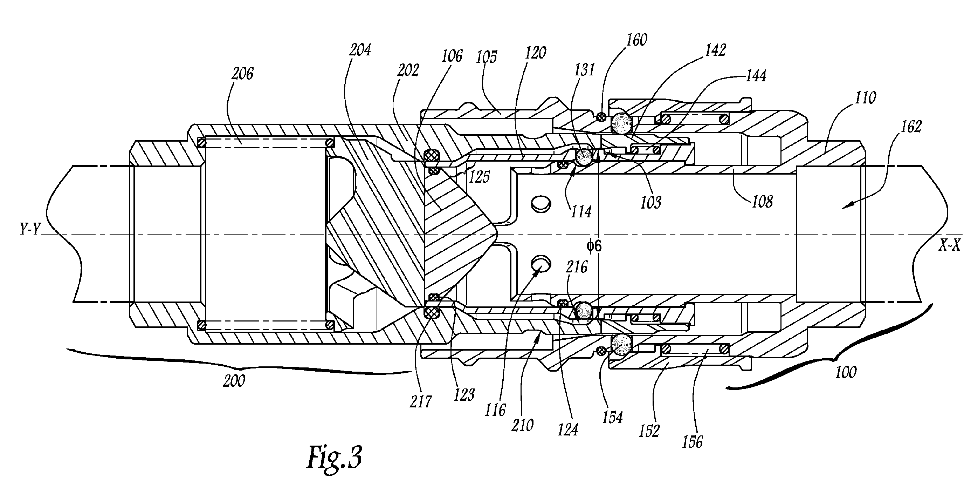

La figure 3 représente une position intermédiaire de l'accouplement entre l'élément mâle 100 et l'élément femelle 200, les axes X-X et Y-Y étant alors confondus en formant un axe d'accouplement. Le corps 202 de l'élément femelle 200 est amené autour de la bague d'étanchéité 120 et vient axialement en contact de la bague mémoire 142, la repoussant ainsi vers l'arrière du corps 101 à l'encontre du ressort 144. L'effort d'accouplement mis en oeuvre combat directement des efforts axiaux liés à l'effort élastique du ressort 206 de la soupape 204, à l'effort de frottement du joint d'étanchéité 217 de la soupape 204 et à l'effort élastique du ressort mémoire 144. La bague mémoire 142, en coopération avec le corps 202, se décale alors axialement par rapport aux billes d'attelage 131 et cesse de les bloquer dans le logement creux 114. Le corps 202 de l'élément femelle 200 vient ensuite au contact de la bague d'étanchéité 120 par butée entre la surface interne 215 de l'épaulement 214 du corps 202 de l'élément femelle 200 et la surface externe 129 de l'épaulement 125 de la bague d'étanchéité 120. L'étanchéité est alors opérationnelle entre la bague d'étanchéité 120 et le corps femelle 202 par l'intermédiaire du joint 217, au même titre qu'entre la bague d'étanchéité 120 et le piston 102 par l'intermédiaire du joint d'étanchéité 124. En revanche, le piston 102 repoussant la soupape 204 vers l'arrière du corps 202 à l'encontre du ressort de soupape 206, la soupape 204 s'éloigne donc de l'élément mâle . Simultanément, le logement creux 216 parvient radialement en regard des billes d'attelage 131 et la progression de l'élément femelle 200 dans le sens de l'accouplement met en translation axiale, vers l'arrière de l'élément de raccord 100, la bague d'étanchéité 120.

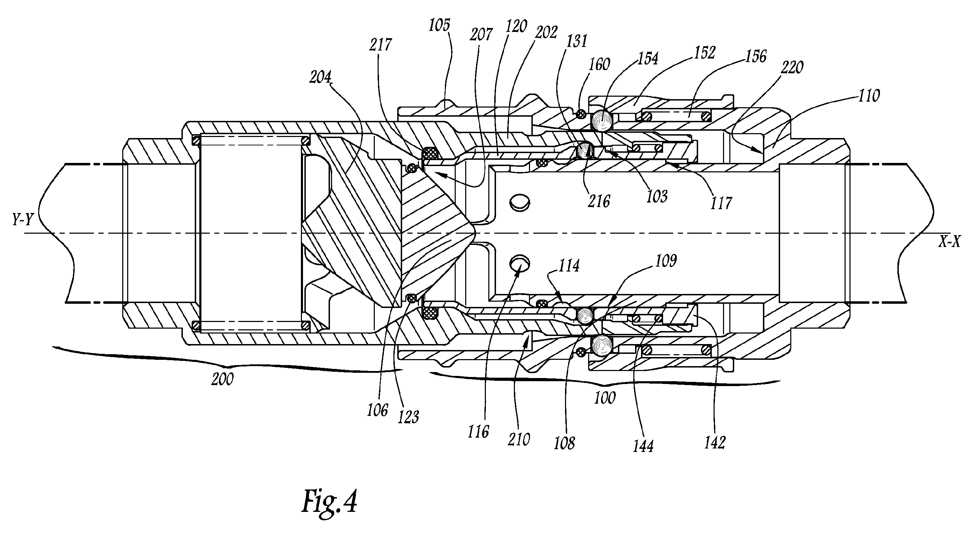

Les billes d'attelage 131 étant libérées du recouvrement de la bague mémoire 142, et se retrouvant face aux logements 216, progressent avec la bague d'étanchéité 120 vers l'arrière de l'élément de raccord 100 et sont radialement chassées du logement interne 114 de la surface externe du piston 102 vers le logement creux 216 du corps femelle 202, passant ainsi le raccord dans la configuration de la figure 4, où les billes d'attelage 131 sont partiellement engagées dans le logement creux 216 et l'étanchéité est rompue entre la bague d'étanchéité 120 et le piston 102, plus particulièrement au niveau du joint d'étanchéité 123. La bague d'étanchéité 120 se trouve dans une position d'ouverture dans laquelle le fluide peut circuler dans le raccord entre les deux éléments du raccord.

De manière avantageuse, le ressort 144 est intercalé entre la bague d'étanchéité 120 et la bague mémoire 142, si bien que dès lors que la bague d'étanchéité 120 est repoussée par le corps 202 de l'élément femelle 200, l'opérateur n'a plus à lutter contre l'effort élastique du ressort 144 pour poursuivre l'accouplement. L'opérateur doit en revanche combattre les efforts de frottements des joints d'étanchéité 123, 124 et l'effort élastique du ressort 206, puis, dès que le fluide circule dans le raccord, uniquement les frottements du joint 124 ainsi que l'effort élastique du ressort 206.

L'organe d'attelage 130 permettant d'atteler le piston 102 et la bague d'étanchéité 120 en configuration désaccouplée remplit successivement une autre fonction qui est la solidarisation axiale de la bague d'étanchéité 120 avec le corps de l'élément femelle 202, aux jeux près, lorsque celle-ci se déplace par rapport au corps 101, ceci avec chaque bille d'attelage 131, logée dans un logement 115, qui se trouve respectivement dans une première position en prise dans le logement 114 du piston 102 puis passe dans une seconde position en prise dans le logement 216 du corps de l'élément femelle 202. En particulier, comme bien visible sur la figure 4, la surface externe 109 du piston 102, à l'arrière du logement 114, recouvre radialement les billes d'attelage 131 dans les logements cylindriques 115, en prise dans le logement 216. Les billes d'attelage 131 sont alors bloquées en coopération axiale avec le corps 202 solidarisant axialement la bague d'étanchéité 120 et le corps 202.

Il est à noter qu'au début du mouvement de la bague d'étanchéité 120 sous l'action du corps 202 en cours d'accouplement, les billes d'attelage 131 solidarisent axialement la bague d'étanchéité 120 et le corps 202 alors même que l'étanchéité est encore opérationnelle au niveau du joint 123.

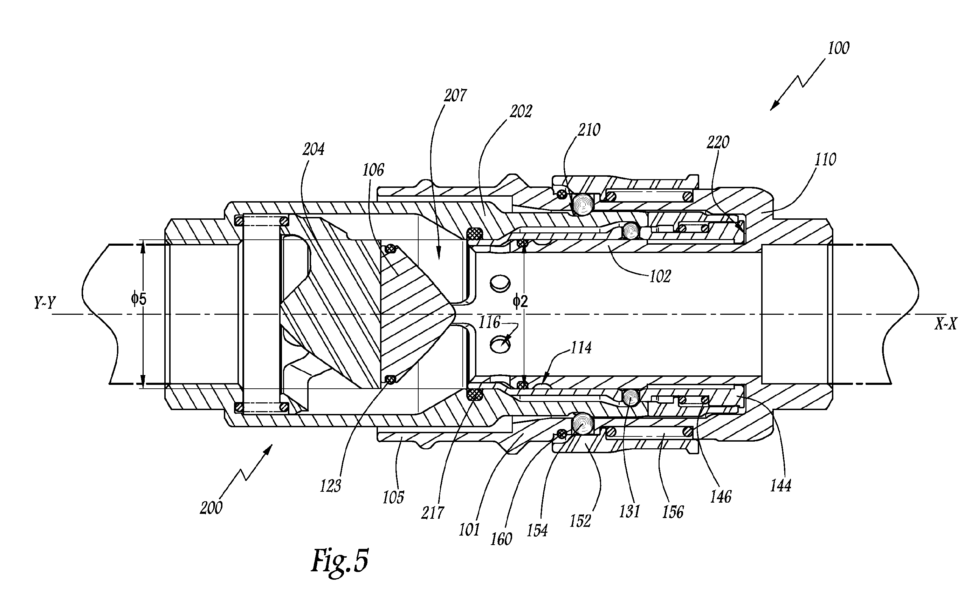

Depuis la configuration intermédiaire de la figure 4, la poursuite de l'accouplement de l'élément femelle 200 avec l'élément mâle 100 consiste à ce que le corps 202 de l'élément femelle 200 continue d'entraîner dans son mouvement de translation la bague d'étanchéité 120 et la bague mémoire 142 jusqu'à ce que la bague d'étanchéité 120 atteigne une butée de fin de course 220 qui représente la zone de contact entre l'extrémité arrière de la bague d'étanchéité 120 et le corps 101 de l'élément mâle 100 , le raccord étant alors sensiblement dans la configuration de la figure 5. La bague mémoire 142, repoussée par la corps 202, est alors décalée axialement par rapport aux billes de verrouillage 154 et n'agit plus sur les billes de verrouillage 154. Durant ce mouvement, l'opérateur lutte uniquement contre les efforts de frottements liés au joint d'étanchéité 124, ce qui fait que les efforts fournis par l'opérateur sont plus importants au début de l'accouplement qu'en fin d'accouplement. Par ailleurs, le corps femelle 202, en repoussant axialement la bague mémoire 142, vient s'intercaler entre les billes de verrouillage 154 et la bague d'étanchéité 120.

Le logement 210 situé sur la surface externe 212 de l'élément femelle 200 vient se positionner en regard radial des billes de verrouillage 154. Les billes de verrouillage 154 sont alors repoussées par la bague de verrouillage 152, en position verrouillée dans le logement 210 prévu à cet effet. La bague de verrouillage 152, entrainée par le ressort de verrouillage 156, vient alors en position verrouillée recouvrir extérieurement les billes de verrouillage 154 : le corps 101 est verrouillé axialement avec le corps 202 et le raccord est accouplé.

En configuration accouplée du raccord, les billes d'attelage 131 sont toujours bloquées par la surface radiale externe 109 dans leur deuxième position de solidarisation axiale de la bague d'étanchéité 120 avec le corps 202. Le corps 101 de l'élément de raccord 100 permet donc de bloquer les billes d'attelage dans leur deuxième position pendant que la bague d'étanchéité 120 se déplace entre la position d'obturation et la position d'ouverture.

Le témoin visuel 160 n'est alors plus visible, car recouvert par la bague de verrouillage 152 comme représenté figure 5 en configuration accouplée. Ce témoin visuel 160 permet donc de témoigner si le système est verrouillé ou non. La bague mémoire 142 sert donc à la fois, au cours de l'accouplement, à découvrir successivement dans cet ordre les billes d'attelage 131 et les billes de verrouillage 154.

On comprend donc que, à titre de variante non représentée, la bague mémoire 142 peut être remplacée par deux pièces distinctes assumant respectivement la fonction de blocage en lien avec l'organe d'attelage 130 et la fonction de mémoire en lien avec le dispositif de verrouillage 150. Ainsi, le fait d'utiliser une même pièce pour assurer les fonctions de blocage et de mémoire permet d'obtenir un raccord plus compact.

L'attelage de la bague d'étanchéité 120 avec le corps femelle 202 par les billes d'attelage 131 permet d'ouvrir le circuit en toute sécurité avant le verrouillage du raccord. En effet, dans le cas où l'accouplement serait interrompu avant le verrouillage du raccord, par le retrait de l'élément 200 hors de l'élément mâle 100, le circuit serait de nouveau obturé sans risque de fuite puisque le retrait du corps femelle 202 entraînerait solidairement le retrait de la bague d'étanchéité 120. Ceci jusqu'à ce que la bague d'étanchéité se désattèle du corps femelle 202 et soit maintenue axialement avec le piston 102, assurant ainsi un recouvrement étanche de celui-ci.

La bague mémoire 142, agissant sur les billes de verrouillage 154, permet de garantir un accouplement automatique, autrement dit sous la seule action d'emmanchement du corps 202 dans l'élément de raccord 100, sans recul de la bague de verrouillage 152 et avec des efforts axiaux d'accouplement minimisés.

Pour atteindre la configuration décrite figure 5, la bague d'étanchéité 120 vient, dans la poursuite de son mouvement, recouvrir la partie cylindrique 108 du piston 102. La bague d'étanchéité 120 est alors susceptible d'entraîner dans son mouvement du fluide, pouvant rester emprisonné entre la surface interne de la bague d'étanchéité, au niveau de la surface interne 128, et la surface radiale externe de la partie cylindrique 108 du piston 102, en recouvrement à l'avant du joint 124. Les trous traversant radiaux 116 permettent alors d'évacuer ces éventuels résidus de fluide vers l'intérieur du piston 102.

En configuration accouplée, la bague d'étanchéité 120 garantit l'étanchéité du raccordement des deux éléments de raccord 100 et 200 en coopérant avec le joint 217 et le joint 124. Le diamètre d'étanchéité Φ5 de la bague d'étanchéité 120 avec le corps 202 au niveau du joint 217, correspondant au diamètre externe de la bague d'étanchéité 120 au contact du joint 217, est strictement inférieur au diamètre d'étanchéité Φ2 de la bague d'étanchéité 120 avec le corps 101, au niveau du joint 124, correspondant au diamètre intérieur de la bague d'étanchéité en contact avec le joint 124, le différentiel étant de l'ordre de 0,15 mm. Ainsi, l'effort du fluide en circulation tend à repousser la bague d'étanchéité 120 vers l'avant de l'élément de raccord 100, en contact contre le corps 202, si bien que les billes d'attelage 131 ne subissent pas d'efforts liés à la pression du fluide.

Lors du désaccouplement, l'opérateur est invité à déverrouiller le raccord en premier lieu, en tirant vers l'arrière sur la bague de verrouillage 154, laissant ainsi apparaitre le témoin visuel de verrouillage 160 et laissant un espace radial de dégagement vers l'extérieur pour les billes de verrouillage 154 . Durant cette opération, l'utilisateur comprime le ressort de verrouillage 156 destiné à rappeler la bague de verrouillage en recouvrement des billes de verrouillage 154. En retirant le corps 202 de l'élément femelle 200 de l'élément mâle 100, l'utilisateur repousse radialement vers l'extérieur les billes de verrouillage 154 qui sortent du logement 210 et entraîne, au moyen des billes d'attelage 131 maintenues dans le logement 216 de la surface interne 212 du corps 202 de l'élément femelle 200, la bague d'étanchéité 120. La bague mémoire 142, entrainée solidairement de la bague d'étanchéité 120 et repoussée par le ressort 144, s'insère sous les billes de verrouillage 154, bloquant le dispositif de verrouillage 150 en position déverrouillée. Puis, les billes d'attelage 131 atteignent radialement le logement creux 114 de la partie cylindrique 108 du piston 102 avec la bague d'étanchéité 120 en butée contre l'épaulement 117 du piston 102. Les billes d'attelage 131 cessent alors de solidariser axialement la bague d'étanchéité 120 et le corps 202 de l'élément femelle 200 alors que la bague d'étanchéité 120 a recouvert de manière étanche le piston 102 et interrompu ainsi la circulation du fluide.

La bague mémoire 142, repoussée par le ressort 144 vient alors de manière intelligente recouvrir les billes d'attelage 131 dans le logement 114 pour maintenir la bague d'étanchéité 120 en position d'obturation du canal d'écoulement 162. Pour cela, le ressort 144 est juste dimensionné pour repousser la mémoire en position de recouvrement des billes d'attelage 131 et des billes de verrouillage 154. Ainsi, ce ressort 144 n'étant pas dimensionné en fonction des frottements induits par les joints 123, 124 et 217 sous pression, l'effort élastique de ce ressort 144 est donc sensiblement inférieur aux efforts de frottements des joints 123, 124 et 217.

Par ailleurs, le diamètre interne Φ6 du corps 202 de l'élément femelle 200 est prévu strictement inférieur au diamètre interne Φ3 de la bague mémoire 142. Ainsi, la bague mémoire 140 dispose d'un jeu radial avec les logements cylindriques 115 des billes d'attelage 131 supérieur au jeu radial dont l'extrémité avant du corps 202 de l'élément femelle 200 dispose avec les logements cylindriques 115. Ceci permet, de manière avantageuse, de faciliter les déplacements de la bague mémoire 142, sous le seul effort élastique du ressort 144, en limitant ses frottements lorsque la surface interne de diamètre minimal Φ6 se décale par rapport aux billes d'attelage 131 au cours du désaccouplement et que la surface interne de diamètre Φ3 vient en recouvrement radial des billes d'attelage 131.

On peut noter qu'au cours du désaccouplement, la bague mémoire 142 a déjà recouvert les billes de verrouillage 154 lorsqu'elle doit recouvrir les billes d'attelage 131 dans le logement creux 114. Ce découplage permet de minimiser l'effort élastique du ressort 144.

L'attelage de la bague d'étanchéité 120 avec le corps femelle 202 par les billes d'attelage 131 tout au long du déplacement de la bague d'étanchéité 120 par rapport au corps 101 ainsi que l'attelage de la bague d'étanchéité 120 avec le corps 101 en configuration désaccouplée permettent de supprimer le rappel élastique de la bague d'étanchéité 120 en position d'obturation par rapport au corps 101 et donc de diminuer les efforts de connexion, par rapport au raccord de l'état de l'art.

D'autres modes de réalisation de l'invention sont envisageables tels que le fait de remplacer les billes de verrouillage par une ou plusieurs griffes de verrouillage maintenues par une bague de verrouillage. Ce mode de réalisation autorise également la construction d'une bague unique agissant à la fois sur l'organe d'attelage et sur le dispositif de verrouillage.

On peut également envisager un raccord présentant un dispositif de verrouillage par baïonnette, dans ce cas, le verrouillage du raccord ne nécessite pas de bague agissant sur des organes de verrouillage.

## Revendications

1. Raccord fluidique, comportant un élément de raccord (100) et un élément de raccord complémentaire (200), aptes à s'accoupler l'un à l'autre selon un axe d'accouplement (X-X, Y-Y), l'élément de raccord (100) comprenant :
- un corps (101) délimitant un canal d'écoulement du fluide (162) dans l'élément de raccord (100),
- un dispositif de verrouillage (150) adapté pour verrouiller axialement le corps (101) de l'élément de raccord (100) avec un corps (202) de l'élément complémentaire lorsque le raccord est en configuration accouplée, et
- une bague d'étanchéité (120), qui, en cours d'accouplement et de désaccouplement du raccord, est déplaçable par rapport au corps (101) de l'élément de raccord entre :
- une position d'obturation du canal d'écoulement (162) du corps (101) de l'élément de raccord (100) lorsque le raccord est en configuration désaccouplée, et
- une position d'ouverture dans laquelle le fluide peut circuler dans le raccord,
cette bague d'étanchéité (120) comprenant un logement (115) de réception d'un organe d'attelage (131) dans lequel l'organe d'attelage (131) est mobile entre :
- une première position, dans laquelle l'organe d'attelage (131) solidarise axialement le corps (101) de l'élément de raccord (100) avec la bague d'étanchéité (120) en position d'obturation, et
- une deuxième position, dans laquelle l'organe d'attelage (131) solidarise axialement le corps (202) de l'élément de raccord complémentaire (200) avec la bague d'étanchéité (120) en position d'ouverture,
- un organe de blocage (142) qui est adapté pour bloquer l'organe d'attelage (131) dans sa première position et pour coopérer avec le corps (202) de l'élément de raccord complémentaire (200), en cours d'accouplement du raccord, pour autoriser le passage de l'organe d'attelage (131) de ladite première à ladite deuxième position,
ce raccord étant **caractérisé en ce que**, en cours d'accouplement et de désaccouplement du raccord, le corps (101) de l'élément de raccord (100) est apte à bloquer l'organe d'attelage (131) dans ladite deuxième position pendant que la bague d'étanchéité (120) se déplace, entre la position d'obturation et une position d'ouverture dans laquelle le dispositif de verrouillage (150) verrouille axialement le corps (202) de l'élément de raccord complémentaire (200) par rapport au corps (101) de l'élément de raccord (100)

2. Raccord suivant la revendication 1, **caractérisé en ce que** le corps (101) de l'élément de raccord (100) comprend un piston (102) interne et une partie de corps externe (104), radialement entre lesquels sont disposés la bague d'étanchéité (120) et l'organe de blocage (142), et **en ce que** le corps (202) de l'élément de raccord complémentaire (200) est mis en place autour de la bague d'étanchéité (120) en cours d'accouplement et de désaccouplement du raccord.

3. Raccord suivant la revendication 2, **caractérisé en ce que** le corps (202) de l'élément de raccord complémentaire (200) présente un logement creux interne (216) qui reçoit l'organe d'attelage (131) lorsque l'organe d'attelage (131) est dans sa deuxième position, et un logement creux externe (210) qui reçoit un organe de verrouillage (154) du dispositif de verrouillage (150) lorsque le raccord est accouplé.

4. Raccord suivant la revendication 3, **caractérisé en ce que**, en configuration accouplée du raccord, le diamètre d'étanchéité (Φ5) de la bague d'étanchéité (120) avec le corps (202) de l'élément de raccord complémentaire (200) est strictement inférieur au diamètre d'étanchéité (Φ2) de la bague d'étanchéité (120) avec le corps (101) de l'élément de raccord (100).

5. Raccord suivant l'une quelconque des revendications 2 à 4, **caractérisé en ce que**, en configuration désaccouplée du raccord, le diamètre (Φ1) d'étanchéité du piston avec la bague d'étanchéité (120), dans sa partie située à une extrémité avant de l'élément de raccord (100), destinée à être tournée vers l'élément de raccord complémentaire (200) lors de l'accouplement, est strictement inférieur au diamètre d'étanchéité (Φ2) du piston (102) avec la bague d'étanchéité (120) dans sa partie assurant l'étanchéité à l'arrière du piston (102).

6. Raccord suivant l'une quelconque des revendications précédentes, **caractérisé en ce que** ledit élément de raccord (100) comprend en outre un ressort (144) qui est disposé axialement, entre la bague d'étanchéité (120) et l'organe de blocage (142) et qui rappelle l'organe de blocage (142) vers sa position de blocage de l'organe d'attelage (131) dans sa première position, lorsque le raccord est désaccouplé.

7. Raccord suivant l'une des revendications précédentes, **caractérisé en ce que** l'organe d'attelage (131) comprend au moins une bille d'attelage (131) mobile radialement dans la bague d'étanchéité (120) et **en ce que** l'organe de blocage (140) est une bague de blocage (142) apte à recouvrir radialement la bille d'attelage dans ladite première position dans laquelle la bille d'attelage (131) coopère axialement avec un logement (114) du corps (101) de l'élément de raccord (100).

8. Raccord suivant la revendication 7, **caractérisé en ce que** l'extrémité avant du corps (202) de l'élément de raccord complémentaire (200) présente un diamètre intérieur (Φ6) qui est strictement inférieur au diamètre intérieur (Φ3) d'une surface interne de la bague de blocage (142), recouvrant la bille d'attelage (131) lorsque le raccord est dans sa configuration désaccouplée.

9. Raccord suivant l'une quelconque des revendications précédentes, **caractérisé en ce que** l'élément de raccord (100) comprend un élément mémoire (142) adapté pour bloquer le dispositif de verrouillage (150) en position déverrouillée lorsque le raccord est en configuration désaccouplée, et pour coopérer avec le corps (202) de l'élément de raccord complémentaire (200) en cours d'accouplement du raccord pour autoriser le passage du dispositif de verrouillage (150) en position verrouillée.

10. Raccord selon revendication 9, **caractérisé en ce que** l'élément mémoire est une bague mémoire (142) qui est rappelée par un ressort (144) vers une position de recouvrement radial d'un organe de verrouillage (154) appartenant au dispositif de verrouillage (150) dans laquelle la bague mémoire (142) bloque le dispositif de verrouillage (150) en position déverrouillée, lorsque le raccord est désaccouplé.

11. Raccord suivant l'une des revendications 9 ou 10, **caractérisé en ce que** l'organe de blocage et l'élément mémoire sont une même bague (142) et **en ce que**, en configuration désaccouplée du raccord, la surface interne de la bague (142) recouvre radialement l'organe d'attelage (131) dans ladite première position et la surface externe de la bague (142) recouvre radialement l'organe de verrouillage (154) dans sa position déverrouillée.

12. Raccord suivant l'une des revendications 10 ou 11, **caractérisé en ce que** la bague mémoire (142) est adaptée pour, au cours de l'accouplement du raccord, découvrir respectivement et successivement, l'organe d'attelage (131) et l'organe de verrouillage (154).

## Patentansprüche

1. Fluidkupplung, ein Kupplungselement (100) und ein komplementäres Kupplungselement (200) umfassend, die geeignet sind, gemäß einer Verbindungsachse (X-X, Y-Y) miteinander gekuppelt zu werden, wobei das Kupplungselement (100) umfasst:
- einen Körper (101), der in dem Kupplungselement (100) einen Strömungskanal (162) für das Fluid begrenzt,
- eine Verriegelungsvorrichtung (150), die geeignet ist, axial den Körper (101) des Kupplungselements (100) mit einem Körper (202) des komplementären Elements zu verriegeln, wenn die Kupplung in der verkuppelten Stellung ist und
- einen Dichtungsring (120), der während des Verkuppelns und Entkuppelns der Kupplung in Bezug auf den Körper (101) des Kupplungselements verschiebbar ist, zwischen:
- einer Stellung des Verschlusses des Strömungskanals (162) des Körpers (101) des Kupplungselements (100), wenn die Kupplung in der entkuppelten Stellung ist und
- eine Offenstellung, in der das Fluid in der Kupplung strömen kann,
wobei dieser Dichtungsring (120) einen Raum (115) zur Aufnahme eines Verspannelements (131) in dem das Verspannelement (131) beweglich ist zwischen:
- einer erste Stellung, in der in der Verschlussstellung das Verspannelement (131) den Körper (101) des Kupplungselements (100) axial mit dem Dichtungsring (120) verbindet, und
- einer zweiten Stellung, in der in der Offenstellung das Verspannelement (131) den Körper (202) des komplementären Kupplungselements (200) axial mit dem Dichtungsring (120) verbindet,
- ein Blockierelement (142), das angepasst ist, das Verspannelement (131) in seiner ersten Stellung zu blockieren und mit dem Körper (202) des komplementären Kupplungselements (200) während des Verbindens der Kupplung zusammenzuarbeiten, um den Übergang des Verspannelements (131) von der ersten Stellung in die zweite Stellung zuzulassen,
wobei diese Kupplung **dadurch gekennzeichnet ist, dass** während des Verkuppelns und des Entkuppeln der Kupplung der Körper (101) des Kupplungselements geeignet ist, das Verspannelement (131) in der zweiten Stellung zu blockieren, bei der der Dichtungsring (120) sich verschiebt zwischen der Verschlussstellung und einer Offenstellung, in der die Verriegelungsvorrichtung (150) axial den Körper (202) des komplementären Kupplungselements (200) in Bezug auf den Körper (101) des Kupplungselements (100) verriegelt.

2. Kupplung nach Anspruch 1, **dadurch gekennzeichnet, dass** der Körper (101) des Kupplungselements (100) einen Innenkolben (102) und einen äußeren Bereich (104) des Körpers aufweist, radial zwischen denen der Dichtungsring (120) und das Blockierelement (142) angeordnet sind, und dass der Körper (202) des komplementären Kupplungselements (200) um den Dichtungsring (120) während des Verkuppelns und Entkuppelns der Kupplung in Stellung gebracht wird.

3. Kupplung nach Anspruch 2, **dadurch gekennzeichnet, dass** der Körper (202) des komplementären Kupplungselements (200) einen vertieften inneren Aufnahmeraum (216), der das Verspannelement (131) aufnimmt, wenn das Verspannelement (131) in seiner zweiten Stellung ist, und einen vertieften äußeren Aufnahmeraum (210) aufweist, der ein Verriegelungselement (154) der Verriegelungsvorrichtung (150) aufnimmt, wenn die Kupplung verkuppelt ist.

4. Kupplung nach Anspruch 3, **dadurch gekennzeichnet, dass** in der verkuppelten Stellung der Kupplung der Durchmesser (φ5) der Abdichtung des Dichtungsrings (120) mit dem Körper (202) des komplementären Kupplungselements (200) streng kleiner als der Durchmesser der Abdichtung (φ2) des Dichtungsrings (120) mit dem Körper (101) des Kupplungselements (100) ist.

5. Kupplung nach einem beliebigen der Ansprüche 2 bis 4, **dadurch gekennzeichnet, dass** in der entkuppelten Stellung der Kupplung der Durchmesser (φ1) der Abdichtung des Kolbens mit dem Dichtungsring (120) an seinem an einem vorderen Ende des Kupplungselements (100) liegenden Bereichs, der dazu dient, zum komplementären Kupplungselement (200) bei dem Verkuppeln gerichtet zu sein, streng kleiner ist als der Durchmesser der Abdichtung (φ2) des Kolbens (102) mit dem Dichtungsring (120) in seinem Bereich, der die Dichtigkeit zu dem Kolben (102) nach hinten sicherstellt.

6. Kupplung nach einem beliebigen der vorhergehenden Ansprüche, **dadurch gekennzeichnet, dass** das Kupplungselement (100) außerdem eine Feder (144) umfasst, die axial zwischen dem Dichtungsring (120) und dem Blockierelement (142) angeordnet ist und die das Blockierelement (142) zu seiner Blockierstellung des Verspannelements (131) in seiner ersten Stellung vorspannt, wenn die Kupplung entkuppelt ist.

7. Kupplung nach einem der vorhergehenden Ansprüche, **dadurch gekennzeichnet, dass** das Verspannelement (131) mindestens eine Verspannkugel (131) umfasst, die radial in dem Dichtungsring (120) beweglich ist, und dass das Blockierelement (140) ein Blockierring (142) ist, der geeignet ist, radial die Verspannkugel in ihrer ersten Stellung zu überdecken, in der die Verspannkugel (131) axial mit einer Aufnahme (114) des Körpers (101) des Kupplungselements (100) zusammenarbeitet.

8. Kupplung nach Anspruch 7, **dadurch gekennzeichnet, dass** das vordere Ende des Körpers (202) des komplementären Kupplungselements (200) einen inneren Durchmesser (φ6) aufweist, der streng kleiner ist als der innere Durchmesser (φ3) einer Innenfläche des Blockierrings (142), der die Verspannkugel (131) überdeckt, wenn die Kupplung in ihrer entkuppelten Stellung ist.

9. Kupplung nach einem beliebigen der vorhergehenden Ansprüche, **dadurch gekennzeichnet, dass** das Kupplungselement (100) ein Speicherelement (142) umfasst, das geeignet ist, die Verriegelungsvorrichtung (150) in der entriegelten Stellung zu blockieren, wenn die Kupplung in ihrer entkuppelten Stellung ist, und mit dem Körper (202) des komplementären Kupplungselements (200) während des Verkuppelns der Kupplung zusammenzuarbeiten, um den Übergang der Verriegelungsvorrichtung (150) in die verriegelte Stellung zu gestatten.

10. Kupplung nach Anspruch 9, **dadurch gekennzeichnet, dass** das Speicherelement ein Speicherring (142) ist, der von einer Feder (144) in eine Stellung der radialen Überdeckung eines zu der Verriegelungsvorrichtung (150) gehörenden Verriegelungselements (154) vorgespannt ist, in der der Speicherring (142) die Verriegelungsvorrichtung (150) in der entriegelten Stellung blockiert, wenn die Kupplung entkuppelt ist.

11. Kupplung nach einem der Ansprüche 9 oder 10, **dadurch gekennzeichnet, dass** das Blockierelement und das Speicherelement ein selber Ring (142) sind und dass in der entkuppelten Stellung der Kupplung die Innenfläche des Rings (142) radial das Verspannelement (131) in der ersten Stellung bedeckt und die Außenfläche des Rings (142) radial das Verriegelungselement (154) in seiner entriegelten Stellung überdeckt.

12. Kupplung nach einem der Ansprüche 10 oder 11, **dadurch gekennzeichnet, dass** der Speicherring (142) geeignet ist, während des Verkuppelns der Kupplung jeweils und aufeinanderfolgend das Verspannelement (131) und das Verriegelungselement (154) freizulegen.

## Claims

1. Fluidic connector, comprising a connecting element (100) and a mated connecting element (200), able to be coupled together according to a coupling axis (X-X, Y-Y), with the connecting element (100) comprising:
- a body (101) delimiting a fluid flow channel (162) in the connecting element (100),
- a locking device (150) suited for axially locking the body (101) of the connecting element (100) with a body (202) of the mated element when the connector is in coupled configuration, and
- a sealing ring (120), which, during the coupling and uncoupling of the connector, can be displaced in relation to the body (101) of the connecting element between:
- a closed-off position of the flow channel (162) of the body (101) of the connecting element (100) when the connector is in uncoupled configuration, and
- an open position wherein the fluid can flow in the connector,
this sealing ring (120) comprising a housing (115) for receiving a coupling member (131) wherein the coupling member (131) is mobile between:
- a first position, wherein the coupling member (131) axially attaches the body (101) of the connecting element (100) with the sealing ring (120) in closed-off position, and
- a second position, wherein the coupling member (131) axially attaches the body (202) of the mated connecting element (200) with the sealing ring (120) in open position,
- a blocking member (142) which is suited for blocking the coupling member (131) in its first position and for cooperating with the body (202) of the mated connecting element (200), during the coupling of the connector, in order to authorise the passage of the coupling member (131) from said first to said second position,
this connector being **characterised in that**, during the coupling and uncoupling of the connector, the body (101) of the connecting element (100) is able to block the coupling member (131) in said second position while the sealing ring (120) is displaced, between the closed-off position and an open position wherein the locking device (150) axially locks the body (202) of the mated connecting element (200) in relation to the body (101) of the connecting element (100)

2. Connector according to claim 1, **characterised in that** the body (101) of the connecting element (100) comprises an internal piston (102) and an external body portion (104), radially between which are arranged the sealing ring (120) and the blocking member (142), and **in that** the body (202) of the mated connecting element (200) is set in place around the sealing ring (120) during the coupling and uncoupling of the connector.

3. Connector according to claim 2, **characterised in that** the body (202) of the mated connecting element (200) has an internal hollow housing (216) that receives the coupling member (131) when the coupling member (131) is in its second position, and an external hollow housing (210) that receives a locking member (154) of the locking device (150) when the connector is coupled.

4. Connector according to claim 3, **characterised in that**, in coupled configuration of the connector, the sealing diameter (Φ5) of the sealing ring (120) with the body (202) of the mated connecting element (200) is strictly less than the sealing diameter (Φ2) of the sealing ring (120) with the body (101) of the connecting element (100).

5. Connector according to any of claims 2 to 4, **characterised in that**, in uncoupled configuration of the connector, the sealing diameter (Φ1) of the piston with the sealing ring (120), in its portion located at a front end of the connecting element (100), intended to be turned towards the mated connecting element (200) during the coupling, is strictly less than the sealing diameter (Φ2) of the piston (102) with the sealing ring (120) in its portion providing the seal to the rear of the piston (102).

6. Connector according to any previous claim, **characterised in that** said connecting element (100) further comprises a spring (144) that is arranged axially, between the sealing ring (120) and the blocking member (142) and which calls back the blocking member (142) towards its blocking position of the coupling member (131) in its first position, when the connector is uncoupled.

7. Connector according to any previous claim, **characterised in that** the coupling member (131) comprises at least one coupling ball (131) mobile radially in the sealing ring (120) and **in that** the blocking member (140) is a blocking ring (142) able to radially cover the coupling ball in said first position wherein the coupling ball (131) cooperates axially with a housing (114) of the body (101) of the connecting element (100).

8. Connector according to claim 7, **characterised in that** the front end of the body (202) of the mated connecting element (200) has an inner diameter (Φ6) that is strictly less than the inner diameter (Φ3) of an internal surface of the blocking ring (142), covering the coupling ball (131) when the connector is in its uncoupled configuration.

9. Connector according to any previous claim, **characterised in that** the connecting element (100) comprises a memory element (142) suited for blocking the locking device (150) in unlocked position when the connector is in uncoupled configuration, and for cooperating with the body (202) of the mated connecting element (200) during coupling of the connector in order to authorise the passage of locking device (150) into locked position.

10. Connector according to claim 9, **characterised in that** the memory element is a memory ring (142) which is recalled by a spring (144) towards a radial covering position of a locking member (154) belonging to the locking device (150) wherein the memory ring (142) blocks the locking device (150) in unlocked position, when the connector is uncoupled.

11. Connector according to claim 9 or 10, **characterised in that** the blocking member and the memory element are the same ring (142) and **in that**, in uncoupled configuration of the connector, the internal surface of the ring (142) radially covers the coupling member (131) in said first position and the external surface of the ring (142) radially covers the locking member (154) in its unlocked position.

12. Connector according to claim 10 or 11, **characterised in that** the memory ring (142) is suited for, during the coupling of the connector, respectively and successively uncover, the coupling member (131) and the locking member (154).
